# EUROPÄISCHE PATENTANMELDUNG

(11) **EP 0 890 552 A2**
(43) Veröffentlichungstag der Anmeldung: **13.01.1999**
(21) Anmeldenummer: 98112443.1
(22) Anmeldetag: 06.07.1998
(51) Int. Cl.: C02F 1/48, F16L 55/00, E03B 7/00

(54) **Korrosionsschutzvorrichtung für Wasserleitungssysteme**

(30) Priorität: 08.07.1997 CH 1658/97
(71) Anmelder: Neuenschwander-Neutair AG, 3000 Bern 26 (CH)
(72) Erfinder: Gantenbein, Hans, 4105 Biel-Benken (CH)
(74) Vertreter: Petschner, Goetz

(57) **Zusammenfassung**

Die Korrosionsschutzvorrichtung für Wasserleitungssysteme umfasst einen über Flanschmittel (5,7) in eine Wasser führende Strömungsleitung (20) ein- und ausbaubaren Druckbehälter, beispielsweise in Form eines Mantelrohres (1), welches vom Volumenstrom umspülbare Permanentmagnetmittel (2-4) umgibt, um durch deren Magnetfeld magnetisierbare Mikropartikel im Volumenstrom niederzuschlagen. Hierbei bestehen die Permanentmagnetmittel aus einer Mehrzahl zentrisch im Mantelrohr (1) auf einer an mindestens einem Stirnflansch (5) des Mantelrohres (1) abgestützten Gewindestange aufgereihte scheibenförmige Dauermagnete (2) mit zwischenliegenden Zwischenpolplatten (3) und stirnseitigen Endpolplatten (4), wobei die Dauermagnete (2) mit wechselnden Pol-Seiten resp. mit wechselnder Polarität (NS,SN, NS u.s.w.) aufgereiht sind.

Eine solche Korrosionsschutzvorrichtung, die im wesentlichen aus einem Magnetflussfilter besteht kann, ohne weiteres in offene oder geschlossene Wärme- oder Kühl-Kreisläufe saug- oder druckseitig eingebaut werden. Der Magnetflussfilter weist dabei einen sehr hohen Wirkungsgrad auf und kann dem Volumenstrom die Korrosionspartikel und Schwebeteile jeder Grössenordnung entziehen. Dies gestattet den Einbau auch in bereits verschlammte Systeme, ohne dass eine chemische Vorbehandlung oder eine Klarspülung der Rohrleitungen vorgenommen werden müsste.

## Beschreibung

Die vorliegende Erfindung betrifft eine Korrosionsschutzvorrichtung für Wasserleitungssysteme.

Das Korrosionsproblem bei Wasserleitungssystemen, wie Brauchwasseranlagen, Heizungen u.dgl. ist bekannt und erfordert aufwendige Gegenmassnahmen. U.a. werden physikalische Wasserbehandlungsgeräte verwendet, welche ein Mineralisieren nichthaftender Kristalle bewirken, die dann mit dem Wasser abfliessen. Abgesehen von einer oft hohen Störanfälligkeit solcher Geräte und einem sehr hohen Wartungsaufwand ist es zudem notwendig, das ganze Rohrsystem periodisch vollständig zu entleeren, um die Ablagerungen auszuschwemmen oder einen Fallbehälter mit Abschlämmung vorzusehen.

Aufgabe der vorliegenden Erfindung ist nun die Schaffung einer Korrosionsschutzvorrichtung für Wasserleitungssysteme, welche praktisch verschleissfrei und wartungsarm arbeitet und welche gestattet, auf eine Systementleerung resp. den aufwendigen Fallbehälter zu verzichten.

Dies wird zunächst erfindungsgemäss erreicht durch einen über Flanschmittel und/oder Rohranschlussmittel und/oder Kupplungsmittel in eine Wasser führende Strömungsleitung ein- und ausbaubaren Druckbehälter, welcher vom Volumenstrom umspülbare Permanentmagnetmittel umgibt, um durch deren Magnetfeld magnetisierbare Mikropartikel im Volumenstrom niederzuschlagen.

Hierbei umfassen vorzugsweise die Permanentmagnetmittel eine Mehrzahl, beispielsweise sieben aufgereihte scheibenförmige Dauermagnete mit zwischenliegenden Zwischenpolplatten und stirnseitigen Endpolplatten zur Trennung der Feldlinien.

Für eine leichte Montage und Reinigung sind zudem die Dauermagnete, die Zwischenpolplatten und die Endpolplatten vorzugsweise auf einer Gewindestange aufgereiht, die an mindestens einem Stirnflansch des Druckbehälters abgestützt ist. Hierbei sind die Dauermagnete mit wechselnden Pol-Seiten resp. mit wechselnder Polarität NS,SN,NS u.s.w. aufgereiht.

Der Druckbehälter kann ein Mantelrohr sein. Um dann mit dem Mantelrohr und den Permanentmagnetmitteln einen der Strömungsleitung etwa gleichen Strömungsquerschnitt zu begrenzen zur Vermeidung von Druckänderungen und Turbulenzen, weist das Mantelrohr einen grösseren Innendurchmesser auf als die Strömungsleitung. Hierfür ist das Mantelrohr über vor- und nachgeschaltete vorzugsweise konische Reduktions-stücke mit der Strömungsleitung verbindbar, wobei anschliessende Ventilmittel ein Absperren des Systems nur im Bereich des Mantelrohres ermöglichen, um den im wesentlichen aus dem Mantelrohr und den Permanentmagnetmitteln gebildeten sogenannten Magnetflussfilter ein- und ausbauen zu können. Entsprechend sind im Bereich der Ventilmittel, seitig dem Mantelrohr, ein Entleerungsventil und ein Entlüftungsventil angeordnet.

Alternativ kann aber auch im Druckbehälter durch eine Zwischenwand ein im Querschnitt U-förmiger Zulauf und Auslauf begrenzt sein, wobei der Auslauf die vom Volumenstrom umspülbaren Permanentmagnetmittel umgibt.

Durch diese erfindungswesentlichen Massnahmen wird eine Korrosionsschutzvorrichtung geschaffen, welche im wesentlichen aus einem Magnetflussfilter besteht und ohne weiteres in offene oder geschlossene Wärme- oder Kühl-Kreisläufe saug- oder druckseitig eingebaut werden kann. Der Magnetflussfilter weist dabei einen sehr hohen Wirkungsgrad auf und kann dem Volumenstrom die Korrosionspartikel und Schwebeteile jeder Grössenordnung entziehen. Dies gestattet den Einbau der erfindungsgemässen Korrosionsschutzvorrichtung auch in bereits verschlammte Systeme, ohne dass eine chemische Vorbehandlung oder eine Klarspülung der Rohrleitungen vorgenommen werden müsste.

Beispielsweise Ausführungsformen des Erfindungsgegenstandes sind nachfolgend anhand der Zeichnung näher erläutert. Es zeigen:
- Fig. 1: eine Gesamtansicht der Korrosionsschutzvorrichtung, teilweise im Schnitt; und
- Fig. 2: eine Ausführungsvariante der erfindungsgemässen Korrosionsschutzvorrichtung.

Die Korrosionsschutzvorrichtung für Wasserleitungssysteme umfasst einen, beispielsweise über Flanschmittel 5,7 in eine Wasser führende Strömungsleitung 20 ein- und ausbaubaren Druckbehälter 1.

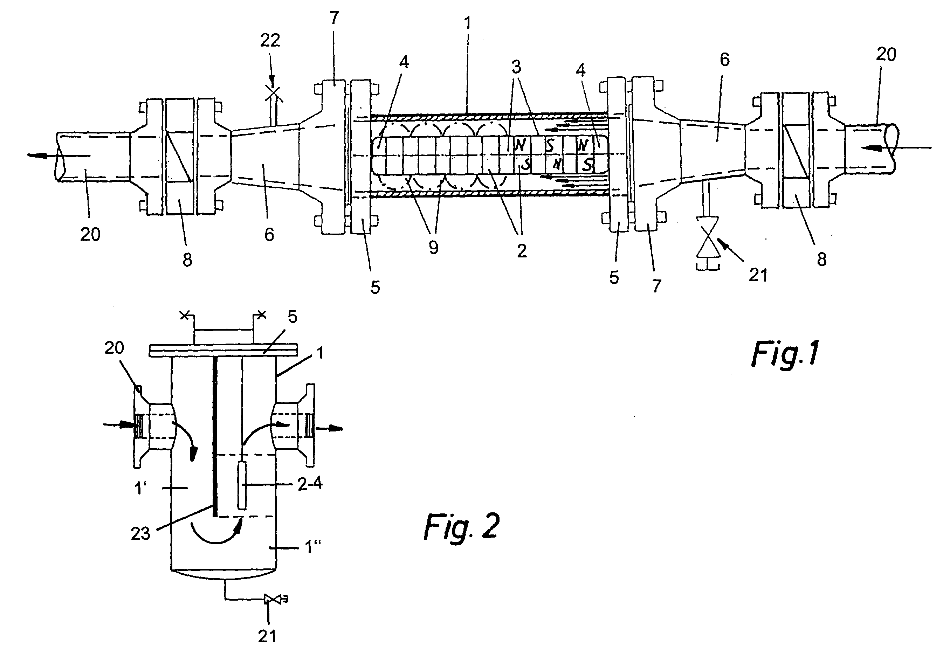

Gemäss Fig. 1 ist dieser Druckbehälter 1 beispielsweise ein Mantelrohr, welches vom Volumenstrom umspülbare Permanentmagnetmittel 2-4 umgibt, um durch deren Magnetfeld magnetisierbare Mikropartikel im Volumenstrom niederzuschlagen. Hierbei bestehen die Permanentmagnetmittel aus einer Mehrzahl zentrisch im Mantelrohr 1 auf einer an Stirnflanschen 5 des Mantelrohres 1 abgestützten Gewindestange (nicht gezeigt) aufgereihte scheibenförmige Dauermagnete 2 mit zwischenliegenden Zwischenpolplatten 3 und stirnseitigen Endpolplatten 4.

Dabei sind die Dauermagnete 2 mit wechselnden Pol-Seiten resp. mit wechselnder Polarität NS,SN,NS u.s.w. aufgereiht. Derart bildet die Anordnung einen Magnetflussfilter, dessen Magnetfeld durch den mittleren Feldlinienverlauf 9 angedeutet ist.

Wie weiter ersichtlich, weist das Mantelrohr 1 einen grösseren Innendurchmesser auf als die Strömungsleitung 20, um mit dem Aussendurchmesser der Permanentmagnetmittel 2-4 einen der Strömungsleitung etwa gleichen Strömungsquerschnitt zu begrenzen. Hierfür ist das Mantelrohr 1 über vor- und nachgeschaltete vorzugsweise konische Reduktionsstücke 6 und Ventilmittel 8 mit der Strömungsleitung 20 verbindbar.

Zudem sind im Bereich der Ventilmittel 8 seitig dem Mantelrohr 1 ein Entleerungsventil 21 und ein Entlüftungsventil 22 angeordnet.

Die erfindungsgemässe Korrosionsschutzvorrichtung resp. deren Magnetflussfilter 1-5 kann in das Wasserleitungssystem direkt eingeschraubt, eingeschweisst oder über spezielle Kupplungsmittel eingebaut werden.

Der Einbau ist sowohl vertikal als auch horizontal möglich.

Für einen Reinigungsvorgang sind zunächst die Ventilmittel 8 zu schliessen und, im wesentlichen, das Mantelrohr 1 über das Entleerungsventil 21 zu enleeren. Dann wird der Magnetflussfilter 1-5 aus der Flanschverbindung 5,7 gelöst. Danach werden die Magnetmittel 2-4 demontiert, etwa durch Ausschrauben der Gewindestange aus einem Spinnkreuz der Flanschmittel 5 (nicht näher gezeigt).

Nach dem Reinigen wird in umgekehrter Weise remontiert, der Mantelrohrabschnitt bei geöffnetem Entlüftungsventil 22 wieder durch das Ventil 21 hindurch geflutet und nach dem Schliessen der genannten Ventile die Systemventile 8 wieder geöffnet.

Alternativ kann aber auch im Druckbehälter 1 durch eine Zwischenwand 23 ein im Querschnitt U-förmiger Zulauf 1' und Auslauf 1'' begrenzt sein, wobei der Auslauf 1'' die vom Volumenstrom umspülbaren Permanentmagnetmittel umgibt.

Durch diese Anordnung ergeben sich höhere Serviceintervalle bei erhöhter Servicefreundlichkeit sowie eine höhere Betriebssicherheit durch Vermeidung eines Verschlusses des Auslaufes.

## Patentansprüche

1. Korrosionsschutzvorrichtung für Wasserleitungssysteme, gekennzeichnet durch einen, über Flanschmittel und/oder Rohranschlussmittel und/oder Kupplungsmittel in eine Wasser führende Strömungsleitung ein- und ausbaubaren Druckbehälter (1), welcher vom Volumenstrom umspülbare Permanentmagnetmittel (2-4) umgibt, um durch deren Magnetfeld magnetisierbare Mikropartikel im Volumenstrom niederzuschlagen.

2. Korrosionsschutzvorrichtung nach Anspruch 1, dadurch gekennzeichnet, dass die Permanentmagnetmittel eine Mehrzahl zentrisch in, den Volumenstrom begrenzenden Wandungsbereichen des Druckbehälters (1) aufgereihte scheibenförmige Dauermagnete (2) mit zwischenliegenden Zwischenpolplatten (3) und stirnseitigen Endpolplatten (4) umfassen.

3. Korrosionsschutzvorrichtung nach den Ansprüchen 1 und 2, dadurch gekennzeichnet, dass die Dauermagnete (2), die Zwischenpolplatten (3) und die Endpolplatten (4) auf einer Gewindestange aufgereiht und an mindestens einem Stirnflansch (5) des Druckbehälters (1) abgestützt sind.

4. Korrosionsschutzvorrichtung nach den Ansprüchen 1 bis 3, dadurch gekennzeichnet, dass die Dauermagnete (2) mit wechselnder Polarität resp. wechselnden Pol-Seiten (NS,SN,NS u.s.w.) aufgereiht sind.

5. Korrosionsschutzvorrichtung nach Anspruch 1, dadurch gekennzeichnet, dass der Druckbehälter (1) ein Mantelrohr ist und einen grösseren Innendurchmesser aufweist als die Strömungsleitung (20), um mit dem Aussendurchmesser der Permanentmagnetmittel (2-4) einen der Strömungsleitung etwa gleichen Strömungsquerschnitt zu begrenzen.

6. Korrosionsschutzvorrichtung nach Anspruch 5, dadurch gekennzeichnet, dass das Mantelrohr (1) über vor- und nachgeschaltete vorzugsweise konische Reduktionsstücke (6) und Ventilmittel (8) mit der Strömungsleitung (20) verbindbar ist.

7. Korrosionsschutzvorrichtung nach Anspruch 6, dadurch gekennzeichnet, dass im Bereich der Ventilmittel (8) seitig dem Mantelrohr (1) ein Entleerungsventil (21) und ein Entlüftungsventil (22) angeordnet sind.

8. Korrosionsschutzvorrichtung nach Anspruch 1, dadurch gekennzeichnet, dass im Druckbehälter (1) durch eine Zwischenwand (23) ein im Querschnitt U-förmiger Zulauf (1') und Auslauf (1'') begrenzt ist, wobei der Auslauf (1'') die vom Volumenstrom umspülbaren Permanentmagnetmittel (2-4) umgibt.
